# EUROPÄISCHE PATENTSCHRIFT

(11) **EP 2 011 384 B1**
(45) Veröffentlichungstag und Bekanntmachung des Hinweises auf die Patenterteilung: **03.03.2010**
(21) Anmeldenummer: 08158065.6
(22) Anmeldetag: 11.06.2008
(51) Int. Cl.: A01F 7/06, A01F 12/24

(54) **Erntegutbearbeitungseinheit mit durchsatzabhängiger Umlaufzahl**
Harvested goods processing unit with capacity-dependant revolution count
Unité de traitement de récoltes dotée d'un nombre de rotations dépendant du débit

(30) Priorität: 03.07.2007 DE 102007030866
(43) Veröffentlichungstag der Anmeldung: 07.01.2009
(73) Patentinhaber: Deere & Company, Moline, IL 61265-8098 (US)
(72) Erfinder: Büermann, Martin, 66500 Hornbach (DE); Pirro, Peter Dr., 66917 Wallhaben (DE); Braunhardt, Klaus, Ottumwa, IA 52501 (US); Becker, Klaus E., East Moline, IL 61244 (US)
(74) Vertreter: Holst, Sönke

(56) Entgegenhaltungen:
- EP-A- 1 894 465
- DE-A1- 3 537 959
- US-A- 3 464 419

## Beschreibung

Die Erfindung betrifft eine Erntegutbearbeitungseinheit mit einem Rotor und einem den Rotor umschließenden Rotorgehäuse, das ein Deckelelement umfasst, unter dem eine erste Gruppe von wendelförmigen Leitschienen und eine zweite Gruppe von wendelförmigen Leitschienen angebracht sind, wobei Leitschienen der beiden Gruppen jeweils alternierend aufeinander folgen und ein in Drehrichtung des Rotors vorlaufendes und ein nachlaufendes Ende aufweisen und die vorlaufenden Enden der Leitschienen der ersten Gruppe gegenüber den vorlaufenden Enden der Leitschienen der zweiten Gruppe in der Drehrichtung des Rotors nach hinten versetzt angeordnet sind.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Rotormähdrescher haben als Erntegutbearbeitungseinrichtung einen oder zwei in einem Rotorgehäuse angeordnete Rotoren zum Dreschen und Trennen des geernteten Gutes. Die Rotoren sind mit einem Beschickungsabschnitt zum Annehmen von Erntegut, das vom Feld geerntet wurde, einem Dreschabschnitt zum Dreschen des vom Beschickungsabschnitt erhaltenen Ernteguts und einem Trennabschnitt zum Herauslösen von Korn ausgestattet, das in dem gedroschenen Erntegut noch enthalten ist, das vom Dreschabschnitt erhalten wurde. Während der Drehung des Rotors wird das Erntegut in Längsrichtung vom Beschickungsabschnitt durch den Dreschabschnitt des Rotors zum Trennabschnitt bewegt. Im Trennabschnitt wird die axiale Bewegung des Ernteguts durch wendelförmige Leitschienen erzielt, die unterhalb des Deckelelements des Rotorgehäuses angeordnet sind. Es sind auch Hybridmähdrescher bekannt, bei denen eine quer angeordnete, im Tangentialflussprinzip arbeitende Dreschtrommel stromauf vor einem oder zwei Trennrotoren angeordnet ist, die zur Trennung des Korns aus dem ausgedroschenen Erntegut dienen und in Aufbau und Funktion mit dem Trennabschnitt der Rotoren der Rotormähdrescher vergleichbar sind.

Die Verweilzeit des Ernteguts im Trennrotor oder Trennabschnitt der Erntegutbearbeitungseinheit hängt von der Steigung der Leitschienen ab, d. h. dem Anstellwinkel zwischen den Leitschienen und dem Radius des Rotors. Die Anzahl und der Anstellwinkel der Leitschienen werden für einen gewissen Volumendurchsatz an Erntegut optimiert, so dass bei einem vorbestimmten Volumendurchsatz eine maximale Trennkapazität erreicht werden kann. Da manche Arten von Erntegut signifikant weniger Strohanteil als andere Arten von Erntegut haben können, und der Strohanteil auch von der veränderbaren Schnitthöhe abhängt, wird in vielen Fällen nicht der vorbestimmte Volumendurchsatz erreicht. Wenn weniger als der vorbestimmte Volumendurchsatz durch den Trennrotor oder Trennabschnitt hindurch läuft, kann das Erntegut schneller als gewünscht bis zum Ende des Trennrotors oder Trennabschnitts durchlaufen und ein hoher Kornanteil als Verlustkorn dem Ernteprozess verloren gehen. Es kann daher bei geringen Strohanteilen oder Erntegutdurchsätzen sinnvoll sein, die Deckelelemente des Trennrotors oder Trennabschnitts auszutauschen (s. EP 0 631 716 A), oder die Steigung der Leitschienen bzw. die Länge, über die sie im Eingriff mit dem Erntegut sind, zu verändern (s. US 4 244 380 A, US 4 258 726 A und die nachveröffentlichte DE 10 2006 040 979 A). Beide Möglichkeiten sind technisch aufwändig und anfällig für Bedienerfehler.

Die als gattungsbildend angesehene DE 35 37 959 A beschreibt einen Mähdrescher mit einer Tangentialdreschtrommel und einem ihr nachfolgenden Trennrotor, der zwei in alternierender Reihenfolge aufeinander folgende Gruppen von Leitschienen aufweist. Um beim Aufprall des Ernteguts auf die Leitschienen entstehende Staus zu vermeiden, sind die stromauf liegenden Auflaufenden einer Gruppe von Leitschienen in Umfangsrichtung des Rotors zueinander versetzt angeordnet, während die Auslaufenden beider Gruppen auf einer Geraden liegen. Die Steigung der Leitschienen ist derart bemessen, dass die Auslaufenden der Leitschienen jeder der Gruppen in axialer Richtung des Rotors mit den Auflaufenden der nachfolgenden Leitschiene derselben Gruppe zusammenfallen.

### Aufgabe der Erfindung

Die der Erfindung zu Grunde liegende Aufgabe wird darin gesehen, eine Erntegutbearbeitungseinheit eingangs genannter Art bereitzustellen, die es auf einfache Weise ermöglicht, dass auch kleinere als einem vorbestimmten Volumendurchsatz entsprechende Emtegutdurchsätze über eine hinreichende Verweildauer in der Erntegutbearbeitungseinheit verbleiben.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine insbesondere als Trennrotor eines Hybridmähdreschers oder Trennabschnitt einer Axialdresch- und Trenneinrichtung eines Axialmähdreschers ausgeführte Erntegutbearbeitungseinheit umfasst einen Rotor und ein Rotorgehäuse, welches mit einem Deckelelement ausgestattet ist, an dessen Unterseite sich zwei Gruppen wendelförmiger Leitschienen befinden. Die Leitschienen beider Gruppen folgen wechselweise aufeinander. Das vorlaufende Ende aller Leitschienen der ersten Gruppe ist gegenüber dem vorlaufenden Ende aller Leitschienen der zweiten Gruppe in der Drehrichtung des Rotors nach hinten versetzt. Die nachlaufenden Enden der Leitschienen der ersten Gruppe sind in axialer Richtung des Rotorgehäuses mit den vorlaufenden Enden von in axialer Richtung des Rotors folgenden Leitschienen der zweiten Gruppe ausgerichtet, d. h. die in Drehrichtung des Rotors stromab liegenden Enden der Leitschienen der ersten Gruppe liegen in axialer Richtung des Rotorgehäuses in Höhe der stromauf liegenden Enden der Leitschienen der zweiten Gruppe. Dabei kann es sich um die unmittelbar folgende Leitschiene der zweiten Gruppe oder die über-, dritt-, etc. nächste Leitschiene der zweiten Gruppe handeln.

Auf diese Weise erreicht man, dass das Erntegut bei kleineren, unter einem Schwellenwert liegenden Volumendurchsätzen abwechselnd durch die Leitschienen der ersten Gruppe und der zweiten Gruppe in axialer Richtung des Rotors nach hinten gefördert wird, da es an ihrem nachlaufenden Ende von den Leitschienen der ersten Gruppe (nach einem Umlauf der Unterseite des Rotors) an das vorlaufende Ende der Leitschienen der zweiten Gruppe übergeben wird. Da das vorlaufende Ende der Leitschienen der zweiten Gruppe in Drehrichtung des Rotors vor dem vorlaufenden Ende der Leitschienen der ersten Gruppe liegt, erfassen die Leitschienen der zweiten Gruppe bei über dem Schwellenwert liegenden Volumendurchsätzen einen Teil des bei kleineren Volumendurchsätzen zu den Leitschienen der ersten Gruppe gelangenden Ernteguts, so dass dieser Teil des Ernteguts dann nicht mit den Leitschienen der ersten Gruppe zusammenwirkt und deshalb eine (gegenüber unter dem Schwellenwert liegenden Volumendurchsätzen) verminderte Anzahl an Umläufen durch das Rotorgehäuse vollführt. Der Schwellenwert wird durch den axialen Abstand zwischen den vorlaufenden Enden der Leitschienen der ersten Gruppe und den Leitschienen der zweiten Gruppe bestimmt. Mit anderen Worten: der Erntegutstrom verbreitert sich bei wachsenden Durchsätzen und die Leitschienen der zweiten Gruppe schneiden sich nach Überschreiten des Schwellenwerts einen Teil davon ab, der schneller zum Auslass gelangt, da er nur mit den Leitschienen der zweiten Gruppe, aber nicht mit den Leitschienen der ersten Gruppe zusammenwirkt.

Man erreicht somit, dass unter dem Schwellenwert liegende Volumendurchsätze eine vorgegebene Umlaufzahl durch die Erntegutbearbeitungseinrichtung vollführen. Bei größeren Volumendurchsätzen befördern die Leitschienen der zweiten Gruppe einen Anteil des Ernteguts mit einer kleineren Umlaufzahl und deshalb höheren Axialgeschwindigkeit zum Auslass der Erntegutbearbeitungseinheit. Dadurch wird eine Überlastung des Rotorgehäuses mit Erntegut bzw. Stroh vermieden und ein geeignetes Trennverhalten erzielt sowie Erntegutverluste vermieden. Eine Verstellung von Leitschienen oder eine Erfassung des aktuellen Erntegutdurchsatzes ist nicht erforderlich.

In einer möglichen Ausführungsform ist eine dritte Gruppe von Leitschienen vorhanden, deren vorlaufende Enden in axialer Richtung des Rotorgehäuses mit den nachlaufenden Enden der Leitschienen der zweiten Gruppe ausgerichtet sind, und deren nachlaufenden Enden in axialer Richtung des Rotorgehäuses mit den vorlaufenden Enden der Leitschienen der ersten Gruppe ausgerichtet sind. Die Leitschienen der dritten Gruppe wirken quasi als Verlängerung der Leitschienen der ersten Gruppe.

Alternativ kann die dritte Gruppe der Leitschienen entfallen. Dann sind zweckmäßigerweise die nachlaufenden Enden der Leitschienen der zweiten Gruppe in axialer Richtung des Rotorgehäuses mit den vorlaufenden Enden der jeweils folgenden Leitschienen der ersten Gruppe ausgerichtet.

Die Steigung der Leitschienen der ersten Gruppe stimmt vorzugsweise mit der Steigung der Leitschienen der zweiten Gruppe und ggf. mit der Steigung der Leitschienen der dritten Gruppe überein. Es können jedoch auch unterschiedliche Steigungen für die einzelnen Gruppen oder sogar für die Leitschienen innerhalb der Gruppen verwendet werden.

### Ausführunqsbeispiel

Anhand der Abbildungen werden drei Ausführungsbeispiele der Erfindung erläutert. Es zeigen:
- Fig. 1: eine teilgeschnittene seitliche Ansicht eines Mähdreschers mit einer axialen Erntegutbearbeitungseinheit,
- Fig. 2: eine perspektivische Ansicht des Gehäuses der Erntegutbearbeitungseinheit,
- Fig. 3: eine perspektivische Ansicht des Rotors,
- Fig. 4: eine Draufsicht auf eine erste Ausführungsform eines Deckels des Rotorgehäuses mit einem relativ geringen Erntegutfluss,
- Fig. 5: eine frontale Ansicht der unterhalb des Deckels angebrachten Leitschienen,
- Fig. 6: eine Draufsicht auf den Deckel der Figur 4 bei größerem Emtegutfluss,
- Fig. 7: eine Draufsicht auf eine zweite Ausführungsform eines Deckels des Rotorgehäuses, und
- Fig. 8: eine Draufsicht auf eine dritte Ausführungsform eines Deckels des Rotorgehäuses.

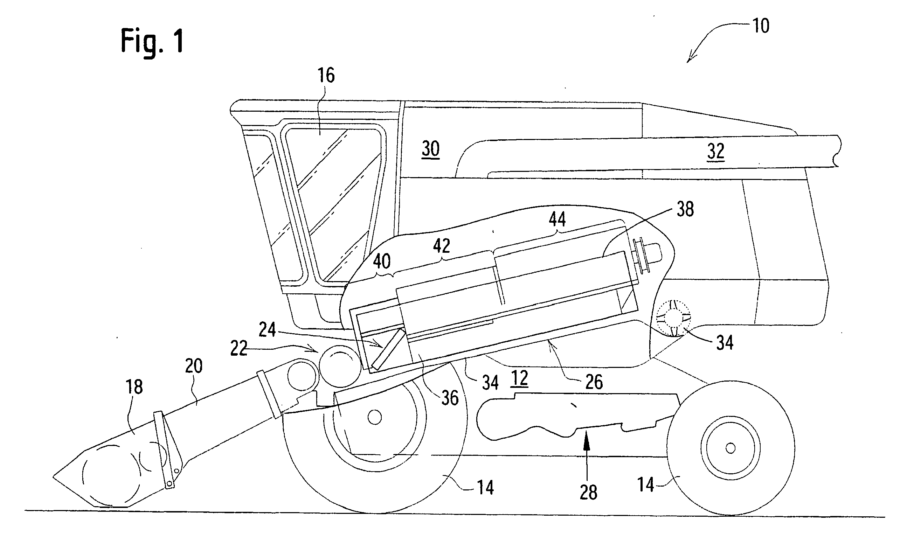

Die Figur 1 zeigt einen landwirtschaftlichen Mähdrescher 10 mit einer tragenden Struktur 12 mit im Eingriff mit dem Boden befindlichen Rädern 14, die an der Struktur 12 befestigt sind. Der Betrieb des Mähdreschers 10 wird von der Bedienerkabine 16 aus kontrolliert. Ein Schneidwerk 18 wird verwendet, um Korn enthaltendes Erntegut zu ernten und es einem Schrägförderer 20 zuzuführen. Das geerntete Gut wird durch den Schrägförderer 20 einer Leittrommel 22 zugeführt. Die Leittrommel 22 leitet das Erntegut durch einen Einlassübergangsabschnitt 24 zu einer axialen Erntegutbearbeitungseinheit 26.

Die Erntegutbearbeitungseinheit 26 umfasst ein Rotorgehäuse 34 und einen darin angeordneten Rotor 36. Der Rotor 36 umfasst eine hohle Trommel 38, an der Gutbearbeitungselemente für einen Beschickungsabschnitt 40, einen Dreschabschnitt 42 und einen Trennabschnitt 44 befestigt sind. Der Beschickungsabschnitt 40 ist an der Vorderseite der axialen Erntegutbearbeitungseinheit 26 angeordnet. In Längsrichtung stromab und rückwärtig des Beschickungsabschnitts 40 liegen der Dreschabschnitt 42 und der Trennabschnitt 44. Die Trommel 38 ist im Beschickungsabschnitt 40 kegelstumpfförmig. Der Dreschabschnitt 42 umfasst einen kegelstumpfförmigen vorderen Abschnitt und einen zylindrischen rückwärtigen Abschnitt. Am Ende der axialen Erntegutbearbeitungseinheit 26 befindet sich der zylindrische Trennabschnitt 44 der Trommel 38.

Korn und Spreu, die durch einen Dreschkorb 46 und ein Trennrost 48 fallen, werden einem Reinigungssystem 28 mit einem Gebläse und in eine Schwingbewegung versetzbaren Lamellensieben zugeführt. Das Reinigungssystem 28 entfernt die Spreu und führt das saubere Korn einem Elevator für sauberes Korn (nicht gezeigt) zu. Der Elevator für sauberes Korn legt das saubere Korn in einem Korntank 30 ab. Das saubere Korn im Korntank 30 kann durch einen Entladeschneckenförderer 32 auf einen Kornwagen, Anhänger oder Lastwagen entladen werden. Gedroschenes und den Trennabschnitt verlassendes Stroh wird durch einen Auslass aus der Erntegutbearbeitungseinheit 26 ausgestoßen und einer Fördertrommel 34 zugeführt. Die Fördertrommel 34 stößt das Stroh wiederum an der Rückseite des Mähdreschers 10 aus, ggf. nach Durchlauf eines Strohhäckslers (nicht gezeigt).

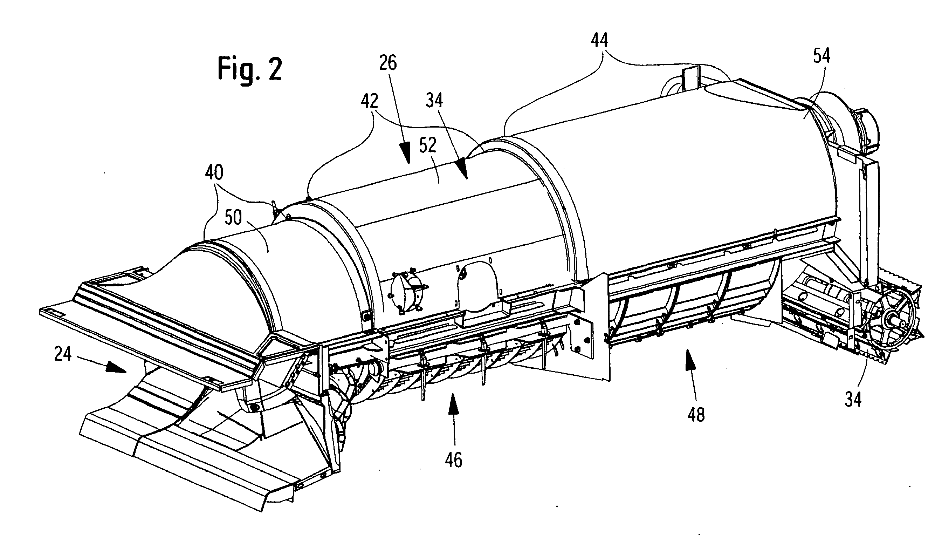

Es wird nun auf die Figur 2 Bezug genommen. Die Unterseite des Rotorgehäuses 34 weist unter dem Dreschabschnitt 42 einen als Dreschkorb 46 bezeichneten Rost auf. Der Trennrost 48 befindet sich unter dem Trennabschnitt 44. Unterhalb des Beschickungsabschnitts 40 ist das Rotorgehäuse 34 geschlossen. An der Oberseite des Rotorgehäuses 34 sind Deckelelemente 50, 52, 54 mit halbkreisförmigem Querschnitt angeordnet, die jeweils dem Beschickungsabschnitt 40, dem Dreschabschnitt 42 und dem Trennabschnitt 44 zugeordnet sind. Das Deckelelement 52 des Dreschabschnitts 42 ist exzentrisch zur Drehachse des Rotors 36 angeordnet, wie auch das Deckelelement 54 des Trennabschnitts 44, dessen Exzentrizität größer als die des Deckelelements 52 des Dreschabschnitts 42 ist. An der Unterseite des Deckelelements 54 des Trennabschnitts 44 befinden sich wendelförmige Leitschienen 56.

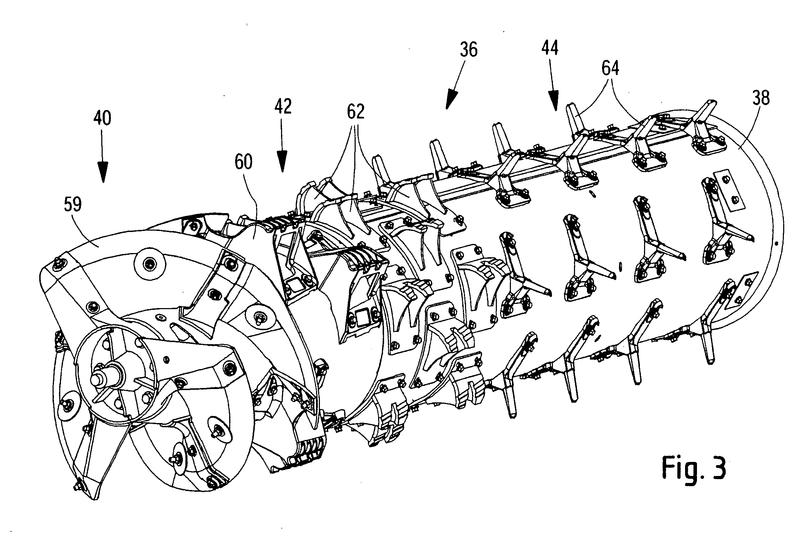

Wie in der Figur 3 dargestellt, ist der Beschickungsabschnitt 40 des Rotors 36 mit wendelförmigen Beschickungselementen 59 ausgestattet, um in das von der Leittrommel 22 erhaltene Erntegut einzugreifen. Der Dreschabschnitt 42 der Erntegutbearbeitungseinheit 26 ist mit einer Anzahl von Dreschzinken 60, 62 zum Dreschen des vom Beschickungsabschnitt erhaltenen Ernteguts ausgestattet. Im Trennabschnitt 44 wird das Korn, das im Dreschabschnitt 42 gedroschen und losgebrochen wurde, durch Trennfinger 64 vom von Korn verschiedenen Erntegut getrennt, die das vom von Korn verschiedene Erntegut vom Korn fort anheben und trennen.

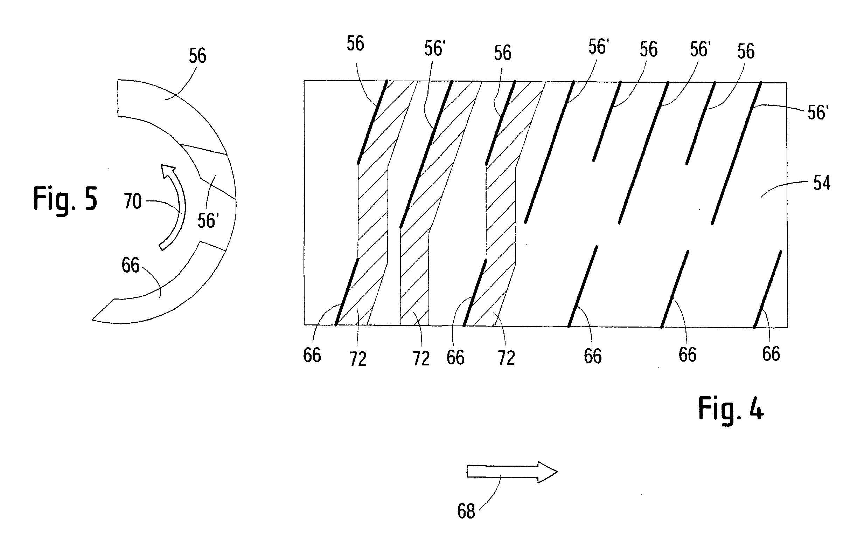

Die Figuren 4 und 5 zeigen eine Draufsicht auf und einen senkrechten Schnitt quer zur Fahrtrichtung durch das Deckelelement 54 des Trennabschnitts 44. Die Drehrichtung des Rotors 36 ist durch den Pfeil 70 gekennzeichnet, und die Flussrichtung des Ernteguts in der Erntegutbearbeitungseinheit 26 mit dem Pfeil 68.

Unmittelbar unterhalb des Deckelelementes 54 sind Leitschienen 56, 56' und 66 angeordnet. Es sind drei Gruppen von Leitschienen vorhanden: eine erste Gruppe von Leitschienen 56, die sich näherungsweise über das in Drehrichtung des Rotors 36 stromab liegende Drittel des Deckelelements 54 erstreckt, eine zweite Gruppe von Leitschienen 56', welche alternierend mit den Leitschienen 56 der ersten Gruppe angeordnet ist und sich über etwas mehr als die stromab liegende Hälfte (im dargestellten Beispiel etwa 60%) des Deckelelements 54 erstreckt, und eine dritte Gruppe von Leitschienen 66, die sich näherungsweise über das in Drehrichtung des Rotors 36 stromauf liegenden Viertel des Deckelelements 54 erstreckt.

Die in Drehrichtung des Rotors 36 stromauf liegenden Enden der Leitschienen 66 der dritten Gruppe liegen (mit Ausnahme der vordersten Leitschiene 66) in axialer Richtung des Rotorgehäuses 34 in Höhe der stromab liegenden Enden der Leitschienen 56' der zweiten Gruppe. Die in Drehrichtung des Rotors 36 stromab liegenden Enden der Leitschienen 66 der dritten Gruppe liegen (mit Ausnahme der hintersten Leitschiene 66) in axialer Richtung des Rotorgehäuses 34 in Höhe der stromauf liegenden Enden der Leitschienen 56 der ersten Gruppe. Die in Drehrichtung des Rotors 36 stromab liegenden Enden der Leitschienen 56 der ersten Gruppe liegen in axialer Richtung des Rotorgehäuses 34 in Höhe der stromauf liegenden Enden der Leitschienen 56' der zweiten Gruppe. Die Steigungen aller Leitschienen 56, 56', 66 sind identisch.

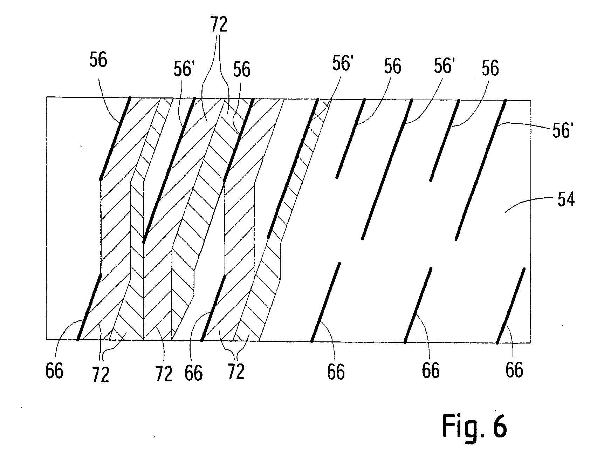

Die Funktionsweise der Leitschienen ist anhand der Figuren 4 und 6 erkennbar. In Figur 4 ist die Situation bei einem relativ kleinen Erntegutfluss dargestellt; das Erntegut wird durch das Bezugszeichen 72 gekennzeichnet. Man erkennt, dass das Erntegut 72 immer abwechselnd durch die Leitschienen 66 der dritten Gruppe, die Leitschienen 56 der ersten Gruppe und durch die Leitschienen 56' der zweiten Gruppe in axialer Richtung des Rotorgehäuses 34 nach hinten geleitet wird. Beim in den Figuren nicht gezeigten Teil ihres Umlaufs durch den unteren Teil des Rotorgehäuses 34 wird das Erntegut 72 nicht in axialer Richtung des Rotors 36 gefördert, sondern nur tangential am Trennrost 48 entlang geführt. Das Erntegut vollführt insgesamt 8 Umläufe durch das Rotorgehäuse 34.

Sobald der Volumendurchsatz einen Schwellenwert überschreitet, der durch den Abstand zwischen den vorlaufenden Enden der Leitschienen 56 der ersten Gruppe und den vorlaufenden Enden der Leitschienen 56' der zweiten Gruppe in axialer Richtung des Rotorgehäuses 34 bestimmt ist, ergibt sich die in der Figur 6 dargestellte Situation. Man erkennt, dass ein Teil des einlaufenden Erntegutstroms 72 von der vordersten Leitschiene 66 der dritten Gruppe abgegeben und - da die vorlaufenden Enden der Leitschienen 56' der zweiten Gruppe in der Drehrichtung des Rotors 36 gegenüber den vorlaufenden Enden der Leitschienen 56 der ersten Gruppe nach vorn versetzt angeordnet und mit den nachlaufenden Enden der Leitschienen 56 der ersten Gruppe ausgerichtet sind - direkt von der vordersten Leitschiene 56' der zweiten Gruppe übernommen (und somit nicht von der vordersten Leitschiene 56 der ersten Gruppe erfasst wird) wird. Der den Schwellenwert übersteigende Anteil des Ernteguts 72 wirkt demnach nur mit den Leitschienen 56' der zweiten Gruppe zusammen und vollführt nur 4 Umläufe durch das Rotorgehäuse. Bei größeren Erntegutdurchsätzen wird somit eine Überlastung der Erntegutbearbeitungseinheit 26 vermieden, während kleinere Erntegutdurchsätze hinreichend lange darin verbleiben, um ein optimales Trennergebnis zu erzielen.

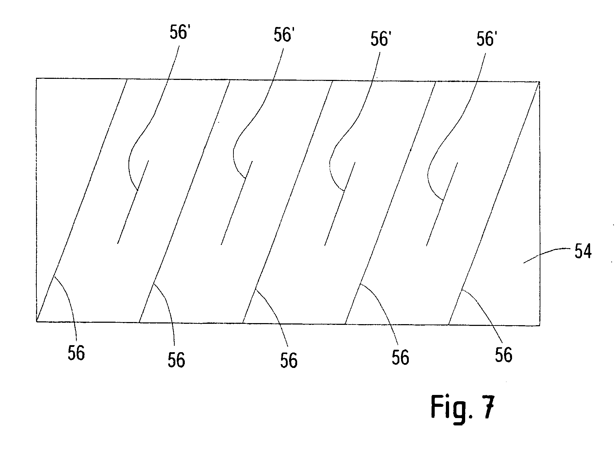

Eine zweite Ausführungsform eines Deckelelements 54 wird in der Figur 7 dargestellt. Es sind nur zwei Gruppen von Leitschienen 56, 56' vorhanden, wobei die Leitschienen 56 der ersten Gruppe sich über die gesamte Breite des Deckelelements 54 erstrecken, während die Leitschienen 56' der zweiten Gruppe nur etwa das mittlere Drittel des Deckelelements 54 überdecken. Die in Drehrichtung des Rotors 36 stromab liegenden Enden der Leitschienen 56 der ersten Gruppe liegen in axialer Richtung des Rotorgehäuses 34 in Höhle der stromauf liegenden Enden der Leitschienen 56' der zweiten Gruppe. Die in Drehrichtung des Rotors 36 stromab liegenden Enden der Leitschienen 56' der zweiten Gruppe liegen in axialer Richtung des Rotorgehäuses 34 in Höhe der stromauf liegenden Enden der Leitschienen 56 der ersten Gruppe. Die Steigungen aller Leitschienen 56, 56', 66 sind identisch.

Die Funktionsweise der zweiten Ausführungsform entspricht jener der ersten Ausführungsform, so dass bei unter einem Schwellenwert des Volumendurchsatzes, der durch den Abstand zwischen den vorlaufenden Enden der Leitschienen 56 der ersten Gruppe und den vorlaufenden Enden der Leitschienen 56' der zweiten Gruppe in axialer Richtung des Rotorgehäuses 34 bestimmt ist, das Erntegut immer abwechselnd durch die Leitschienen 56 der ersten Gruppe und die Leitschienen 56' der zweiten Gruppe nach hinten zum Auslass geleitet wird. Wird der Schwellenwert überschritten, wird ein Teil des Ernteguts lediglich durch die Leitschienen 56' der zweiten Gruppe gefördert, so dass die Verweilzeit in der Erntegutbearbeitungseinheit 26 kleiner als bei dem übrigen Erntegut ist.

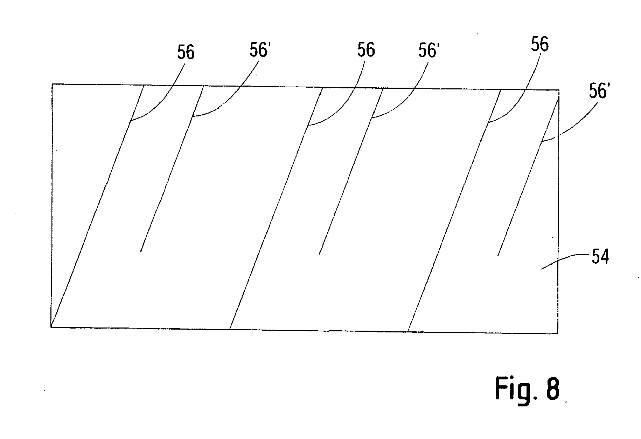

Die dritte Ausführungsform gemäß Figur 8 unterscheidet sich von der zweiten Ausführungsform lediglich dadurch, dass die Leitschienen 56' der zweiten Gruppe sich über die stromab liegenden 2/3 des Deckelelements 54 erstrecken.

## Patentansprüche

1. Erntegutbearbeitungseinheit (26) mit einem Rotor (36) und einem den Rotor (36) umschließenden Rotorgehäuse (34), das ein Deckelelement (54) umfasst, unter dem eine erste Gruppe von wendelförmigen Leitschienen (56) und eine zweite Gruppe von wendelförmigen Leitschienen (56') angebracht sind, wobei Leitschienen (56, 56') der beiden Gruppen jeweils alternierend aufeinander folgen und ein in Drehrichtung des Rotors (36) vorlaufendes und ein nachlaufendes Ende aufweisen und die vorlaufenden Enden der Leitschienen (56) der ersten Gruppe gegenüber den vorlaufenden Enden der Leitschienen (56') der zweiten Gruppe in der Drehrichtung des Rotors (36) nach hinten versetzt angeordnet sind, **dadurch gekennzeichnet, dass** die in Drehrichtung des Rotors (36) stromab liegenden Enden der Leitschienen (56) der ersten Gruppe in axialer Richtung des Rotorgehäuses (34) in Höhe der stromauf liegenden Enden der Leitschienen (56') der zweiten Gruppe liegen.

2. Erntegutbearbeitungseinheit (26) nach Anspruch 1, **dadurch gekennzeichnet, dass** die in Drehrichtung des Rotors (36) stromab liegenden Enden der Leitschienen (56) der ersten Gruppe in axialer Richtung des Rotorgehäuses (34) in Höhe der stromauf liegenden Enden der jeweils unmittelbar folgenden Leitschienen (56') der zweiten Gruppe liegen.

3. Erntegutbearbeitungseinheit (26) nach Anspruch 1 oder 2, **gekennzeichnet durch** eine dritte Gruppe von Leitschienen (66), deren vorlaufende Enden in axialer Richtung des Rotorgehäuses (34) in Höhe der nachlaufenden Enden der Leitschienen (56') der zweiten Gruppe liegen, und deren nachlaufenden Enden in axialer Richtung des Rotorgehäuses (34) sich in Höhe der vorlaufenden Enden der Leitschienen (56) der ersten Gruppe liegen.

4. Erntegutbearbeitungseinheit (26) nach Anspruch 1 oder 2, **dadurch gekennzeichnet, dass** die nachlaufenden Enden der Leitschienen (56') der zweiten Gruppe in axialer Richtung des Rotorgehäuses (34) in Höhe der vorlaufenden Enden der jeweils unmittelbar folgenden Leitschienen (56) der ersten Gruppe liegen.

5. Erntegutbearbeitungseinheit (26) nach einem der Ansprüche 1 bis 4, **dadurch gekennzeichnet, dass** die Steigung der Leitschienen (56) der ersten Gruppe mit der Steigung der Leitschienen (56') der zweiten Gruppe und ggf. mit der Steigung der Leitschienen (66) der dritten Gruppe übereinstimmt.

6. Erntegutbearbeitungseinheit (26) nach einem der Ansprüche 1 bis 5, **dadurch gekennzeichnet, dass** der Rotor (36) und das Rotorgehäuse (34) einen Trennabschnitt (44) umfassen, dem das Deckelement (54) zugeordnet ist.

7. Mähdrescher (10) mit einer Erntegutbearbeitungseinheit (26) nach einem der Ansprüche 1 bis 6.

## Claims

1. Crop processing unit (26) with a rotor (36) and a rotor housing (34) surrounding the rotor (36) and comprising a cover element (54), under which a first group of helical guide bars (56) and a second group of helical guide bars (56') are mounted, guide bars (56, 56') of the two groups succeeding one another in each case in alternation and having a leading end and a trailing end in the direction of rotation of the rotor (36), and the leading ends of the guide bars (56) of the first group being arranged offset rearwards in the direction of rotation of the rotor (36), relative to the leading ends of the guide bars (56') of the second group, **characterized in that** those ends of the guide bars (56) of the first group which are situated downstream in the direction of rotation of the rotor (36) are situated at the level of the upstream ends of the guide bars (56') of the second group in the axial direction of the rotor housing (34).

2. Crop processing unit (26) according to Claim 1, **characterized in that** those ends of the guide bars (56) of the first group which are situated downstream in the direction of rotation of the rotor (36) are situated at the level of the upstream ends of the in each case directly following guide bars (56') of the second group in the axial direction of the rotor housing (34).

3. Crop processing unit (26) according to Claim 1 or 2, **characterized by** a third group of guide bars (66), the leading ends of which are situated at the level of the trailing ends of the guide bars (56') of the second group in the axial direction of the rotor housing (34), and the trailing ends of which are situated at the level of the leading ends of the guide bars (56) of the first group in the axial direction of the rotor housing (34).

4. Crop processing unit (26) according to Claim 1 or 2, **characterized in that** the trailing ends of the guide bars (56') of the second group are situated at the level of the leading ends of the in each case directly following guide bars (56) of the first group in the axial direction of the rotor housing (34).

5. Crop processing unit (26) according to one of Claims 1 to 4, **characterized in that** the pitch of the guide bars (56) of the first group coincides with the pitch of the guide bars (56') of the second group and, if appropriate, with the pitch of the guide bars (66) of the third group.

6. Crop processing unit (26) according to one of Claims 1 to 5, **characterized in that** the rotor (36) and the rotor housing (34) comprise a separating section (44), to which the cover element (54) is assigned.

7. Combine harvester (10) with a crop processing unit (26) according to one of Claims 1 to 6.

## Revendications

1. Unité de traitement de récoltes (26) avec un rotor (36) et une enceinte de rotor (34) enveloppant le rotor (36), qui comprend un élément de couvercle (54) sous lequel sont disposés un premier groupe de rails de guidage hélicoïdaux (56) et un deuxième groupe de rails de guidage hélicoïdaux (56'), dans laquelle des rails de guidage (56, 56') des deux groupes se succèdent en alternance et présentent une extrémité avant et une extrémité arrière dans le sens de rotation du rotor (36) et les extrémités avant des rails de guidage (56) du premier groupe sont disposées avec un décalage vers l'arrière dans le sens de rotation du rotor (36) par rapport aux extrémités avant des rails de guidage (56') du deuxième groupe, **caractérisée en ce que** les extrémités des rails de guidage (56) du premier groupe situées en aval dans le sens de rotation du rotor (36) sont situées, dans la direction axiale de l'enceinte de rotor (34), à hauteur des extrémités des rails de guidage (56') du deuxième groupe situées en amont.

2. Unité de traitement de récoltes (26) selon la revendication 1, **caractérisée en ce que** les extrémités des rails de guidage (56) du premier groupe situées en aval dans le sens de rotation du rotor (36) sont situées, dans la direction axiale de l'enceinte de rotor (34), à hauteur des extrémités, situées en amont, des rails de guidage respectifs (56') du deuxième groupe qui suivent immédiatement.

3. Unité de traitement de récoltes (26) selon la revendication 1 ou 2, **caractérisée par** un troisième groupe de rails de guidage (66), dont les extrémités avant sont situées, dans la direction axiale de l'enceinte de rotor (34), à hauteur des extrémités arrière des rails de guidage (56') du deuxième groupe, et dont les extrémités arrière sont situées, dans la direction axiale de l'enceinte de rotor (34), à hauteur des extrémités avant des rails de guidage (56) du premier groupe.

4. Unité de traitement de récoltes (26) selon la revendication 1 ou 2, **caractérisée en ce que** les extrémités arrière des rails de guidage (56') du deuxième groupe sont situées, dans la direction axiale de l'enceinte de rotor (34), à hauteur des extrémités avant des rails de guidage respectifs (56) du premier groupe qui suivent immédiatement.

5. Unité de traitement de récoltes (26) selon l'une quelconque des revendications 1 à 4, **caractérisée en ce que** la pente des rails de guidage (56) du premier groupe concorde avec la pente des rails de guidage (56') du deuxième groupe et éventuellement avec la pente des rails de guidage (66) du troisième groupe.

6. Unité de traitement de récoltes (26) selon l'une quelconque des revendications 1 à 5, **caractérisée en ce que** le rotor (36) et l'enceinte de rotor (34) comprennent une section de séparation (44), à laquelle l'élément de couvercle (54) est associé.

7. Moissonneuse-batteuse (10) avec une unité de traitement de récoltes (26) selon l'une quelconque des revendications 1 à 6.
